# EUROPÄISCHE PATENTSCHRIFT

(11) **EP 1 538 040 B1**
(45) Veröffentlichungstag und Bekanntmachung des Hinweises auf die Patenterteilung: **20.01.2010**
(21) Anmeldenummer: 04027820.2
(22) Anmeldetag: 24.11.2004
(51) Int. Cl.: B60T 8/00, B60R 16/02, G07C 5/08

(54) **Verfahren zur Übertragung von Daten zwischen Teilfahrzeugen eines Fahrzeugverbandes**
Method of transmitting data between vehicles in a tractor-trailer system
Procédé de transmission de données entre véhicules dans un ensemble tracteur-remorque

(30) Priorität: 04.12.2003 DE 10356674
(43) Veröffentlichungstag der Anmeldung: 08.06.2005
(73) Patentinhaber: KNORR-BREMSE Systeme für Nutzfahrzeuge GmbH, 80809 München (DE)
(72) Erfinder: Hecker, Falk, Dr., 71706 Markgröningen (DE); Horn, Matthias, 71229 Leonberg (DE)
(74) Vertreter: Schönmann, Kurt

(56) Entgegenhaltungen:
- EP-A- 0 425 766
- DE-A1- 19 813 957
- DE-C1- 4 130 848
- DE-C1- 19 829 489
- US-A- 5 920 128

## Beschreibung

Die Erfindung betrifft ein Verfahren zur Übertragung von Daten zwischen Teilfahrzeugen in einem mindestens ein erstes und ein zweites Teilfahrzeug umfassenden Fahrzeugverband von Teilfahrzeugen.

In Fahrzeugverbänden, beispielsweise in Sattelzügen, Deichselzügen oder Gliederzügen, die aus zwei oder mehr Teilfahrzeugen bestehen, ist es erforderlich, Informationen oder Daten aus dem jeweils anderen Teilfahrzeug in dem einen Teilfahrzeug zu wissen.

Bei bekannten Systemen, die den Betrieb von Fahrzeugverbänden unterstützen, wie z. B. dem elektronischen Bremssystem (EBS) oder dem elektronischen Stabilitätsprogramm (ESP), werden die meisten Daten, z. B. die Beladung des Teilfahrzeugs, Zustände oder interne Daten des Bremssystems, in den jeweiligen Teilfahrzeugen selbst ermittelt und stehen daher auch nur diesen allein zur Verfügung.

Andere Daten hingegen werden gemäß einer vorgeschriebenen Spezifikation zwischen den Teilfahrzeugen übertragen, beispielsweise über eine nach der ISO-Norm 11992 genormte Schnittstelle. Somit findet ein Austausch vieler Daten zwischen den Teilfahrzeugen bisher nicht statt, obwohl es eine genormte Schnittstelle, beispielsweise die nach der ISO-Norm 11992 genormte Schnittstelle, zwischen ihnen gibt. Gemäß der Norm sind die Dateninhalte genau vorgeschrieben; und aus Kompatibilitätsgründen dürfen zwischen den Fahrzeugen verschiedener Hersteller keine über die erlaubten Daten hinausgehenden Daten übertragen werden.

Aus diesem Grund müssen beispielsweise in einem Zugfahrsystem die vom Hängersystem benötigten Daten auf andere Art ermittelt werden, z. B. durch Schätzalgorithmen, usw.. Die Art der Ermittlung ist zeitaufwendig und darüber hinaus mit großen Unsicherheiten verbunden.

Über die definierte Schnittstelle sind allerdings Diagnose-Botschaften erlaubt, um das Anhänger-System per Werkstattdiagnose, beispielsweise mittels eines PC, vor Ort zu warten. Dabei werden beispielsweise Fehlerspeicher und aktuelle Messwerte ausgelesen oder Parameter geändert.

Aus der EP 0 425 766 A1 ist eine Norm-Steckverbindung nach ISO 7638 zwischen einem Zugfahrzeug und einem Anhängefahrzeug bekannt, wobei abweichend von der Norm Pole der Steckverbindung zum Anschluss an ein gesondertes Diagnose-Prüfgerät mit entsprechenden Leitungen belegt sind. Während des Fahrbetriebs dient einer dieser Pole der Steckverbindung zur Übertragung von Daten über den Ist-Zustand der Anhängerbremse an eine Bremsdruckregelvorrichtung des Zugfahrzeugs.

Die US 5,920,128 offenbart eine Kommunikationsverbindung zwischen einem Zugfahrzeug und einem Anhängerfahrzeug gemäß SAE J-560, über welche Diagnosedaten bezüglich des elektrischen Systems des Anhängers übertragen werden.

Es ist die Aufgabe der Erfindung, eine erweiterte Funktionalität bezüglich des Austauschs von Daten und Information während des Fahrbetriebs eines Fahrzeugverbands zur Verfügung zu stellen.

Die Erfindung basiert auf einem Verfahren zur Übertragung von Daten zwischen Teilfahrzeugen in einem mindestens ein erstes und ein zweites Teilfahrzeug umfassenden Fahrzeugverband von Teilfahrzeugen mit mindestens einer Datenleitung mit einer Schnittstelle nach der ISO-Norm 11992, wobei zusätzlich zu den gemäß der ISO-Norm 11992 zugelassenen Daten weitere Daten, die gemäß der Norm nicht zugelassen werden, über die Schnittstelle zwischen dem ersten und dem zweiten Teilfahrzeug übertragen werden. Somit werden über die Norm hinausgehend die in der genormten Schnittstelle nicht zugelassenen Daten trotzdem über diese ausgetauscht, ohne die Definition der Schnittstelle zu verändern oder nicht erlaubte Zusatzdaten zu versenden.

Die Daten betreffen (bereits existierende) Diagnose-Botschaften. Auf diese Art können die Teilfahrzeuge relevante Informationen, z. B. über interne Größen und/oder Zustände mit einander austauschen, wobei der Austausch in der Regel wohl nur vom Anhänger zum Zugfahrzeug erfolgt; jedoch ist auch die umgekehrte Richtung im Rahmen der Erfindung möglich. Die Funktionen in den Teilfahrzeugen profitieren somit von den ausgetauschten Daten und Informationen, ohne dass eine zeitaufwendige Neunormung oder Neudefinition der Schnittstelle erforderlich wäre.

Der Datenaustausch zwischen dem ersten Teilfahrzeug, also beispielsweise dem mit einem EBS-Bremssystem ausgestatteten Zugfahrzeug, und dem zweiten Teilfahrzeug, also beispielsweise dem mit einem TEBS-Bremssystem (T = trailer)-Bremssystem ausgestatteten Anhänger, erfolgt über den CAN-Bus des Anhängers. Auf diese Weise wird der Beladungszustand des Anhängers innerhalb des ESP (=Elektronisches Sicherheitsprogramm) schnell und genau erfasst. Gegenüber dem Stand der Technik werden ESP-Zugriffe präziser durchgeführt, und das System ist schneller aktiv, da der Beladungszustand des Aufliegers oder Anhängers schneller bekannt ist. Das Verfahren nach der Erfindung ist besonders dann wertvoll, wenn im Zugfahrzeug keine Achslastinformation mehr vorliegt. Dies ist insbesondere in den neueren EBS-Systemen der Fall. Die Erfindung lässt sich aber beispielsweise auch auf ABS-Systeme mit einer geeigneten Schnittstelle zwischen dem Zugfahrzeug und dem Anhänger, beispielsweise einer PLC-Schnittstelle, übertragen.

Die Daten von dem zweiten Teilfahrzeug werden mittels einer Diagnose-Abfrage zu dem ersten Teilfahrzeug übertragen. Dabei ist erfindungsgemäß vorgesehen, dass Daten über das Gewicht des zweiten Teilfahrzeugs, über die Achslasten des zweiten Teilfahrzeugs und über den Schlupf an den einzelnen Laufrädern oder an den Achsen des zweiten Teilfahrzeugs abgefragt werden.

Bevorzugt wird ein festgelegtes Abfrage-Schema eingesetzt, nach dem die Daten abgefragt werden.

Von Vorteil ist auch eine Weiterbildung des Verfahrens, bei der eine Diagnoseabfrage zu einem festgelegten Zeitpunkt durchgeführt wird, insbesondere zu einem Zeitpunkt, der kurz nach dem Anfahren des Fahrzeugverbands liegt. Andere Zeitpunkte orientieren sich nach Sicherheitskriterien, die spezifisch für das Fahrzeug, die Häufigkeit seines Einsatzes, die Zahl der bereits geleisteten Betriebsstunden, die Dauer des aktuellen Einsatzes, usw. sind. Geeignet sind jedoch auch andere Zeitpunkte oder Zeiträume. Insbesondere in Zeiträumen, während derer keine Übertragung normgemäß vorgesehener Daten stattfindet, lassen sich die zusätzlichen Daten übertragen.

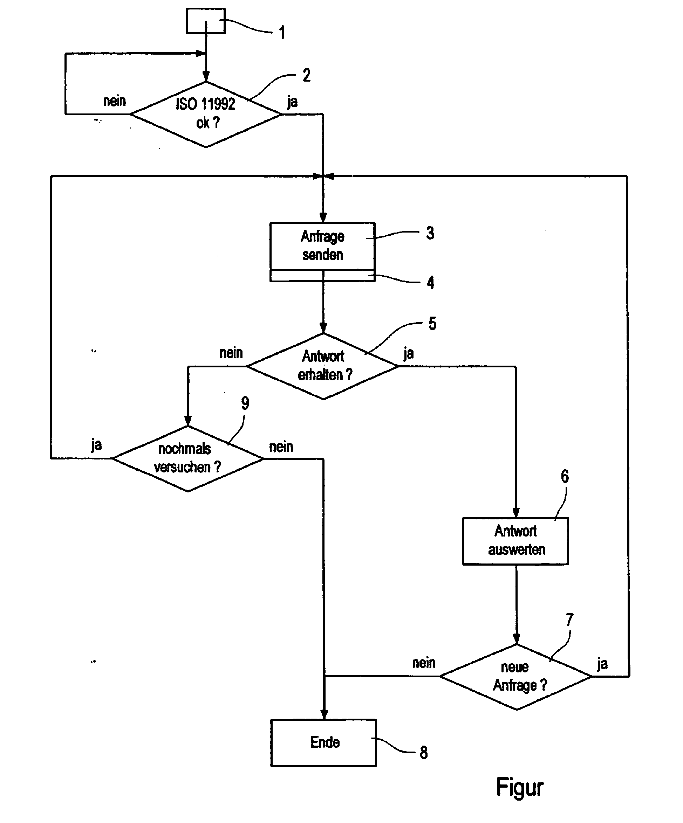

Nachstehend wird die Erfindung in einem Ausführungsbeispiel anhand der einzigen Figur näher erläutert. Diese zeigt ein Abfrageschema, nach dem eine in dem ersten Teilfahrzeug angeordnete Steuereinheit 1 über eine der Norm ISO 11992 entsprechende Schnittstelle 2 deren Status abfragt. Wenn der Status nicht auf Empfangsbereitschaft liegt, erhält die Steuereinheit die Rückmeldung "Nein", und es muss eine Überprüfung der Schnittstelle 2 vorgenommen werden.

Wenn jedoch Empfangsbereitschaft vorliegt, sendet die Steuereinheit 1 eine Anfrage 3 an eine Steuereinheit 4 des zweiten Teilfahrzeugs. Wenn sie eine Antwort 5 erhält, wertet sie in einem nächsten Schritt 6 diese Antwort aus.

Dann entscheidet sie in einem Schritt 7 darüber, ob eine neue Anfrage erforderlich ist, etwa, um den Status einer anderen Teileinheit des zweiten Teilfahrzeugs zu erfragen oder ob die erhaltene Information noch den Erhalt weiterer Daten erforderlich macht.

Sofern eine weitere Anfrage erforderlich ist, wird wieder bei dem Schritt 3 eingesetzt, und die Steuereinheit 1 sendet eine neue Anfrage 3 an die Steuereinheit 4. Anderenfalls wird die Anfrage 3 mit dem Schritt 8 "Ende" beendet.

Wenn der Schritt 5 nicht erfolgreich war, wird in einem Schritt 9 entschieden, ob die Anfrage 3 wiederholt gesendet werden soll. Die Entscheidung hängt von vielen Umständen ab, beispielsweise auch vom Zeitablauf. So kann die Anfrage 3 in einem bestimmten zeitlichen Abstand wiederholt werden, weil dann damit gerechnet werden kann, dass die Steuereinheit 4 nun eine Antwort auf die Anfrage 3 zur Verfügung stellen kann.

Es kann jedoch auch entschieden werden, dass die Anfrage nicht wiederholt wird; dann wird sofort der Schritt "Ende" erreicht. In diesem Fall greift die Steuereinheit 1 auf bereits in einem Speicher innerhalb des ersten Teilfahrzeugs gespeicherte Daten zurück. Oder sie führt eine Schätzung anhand früher verwendeter Informationen oder Daten durch.

Alternativ gibt die Steuereinheit 1 eine Fehlermeldung ab, die beispielsweise dem Fahrer in dem ersten Teilfahrzeug signalisiert wird.

Anstelle dieses Anfrage-Schemas ist gemäß der Erfindung eine Vielzahl anderer Anfrage-Schemen realisierbar. Der Aufbau der Schemen hängt dabei jeweils von der von der Steuereinheit abzufragenden und in Bezug zu einander stehenden Daten und Informationen ab.

## Patentansprüche

1. Verfahren zur Übertragung von Daten zwischen Teilfahrzeugen in einem mindestens ein erstes und ein zweites Teilfahrzeug umfassenden Fahrzeugverband von Teilfahrzeugen mit mindestens einem Datenbus mit einer Schnittstelle (2), wobei zusätzlich zu den gemäß einer Spezifikation zugelassenen Daten weitere Daten, die gemäß der Spezifikation nicht zugelassen werden, über die Schnittstelle (2) zwischen dem ersten und dem zweiten Teilfahrzeug übertragen werden, wobei die Daten von dem zweiten Teilfahrzeug mittels einer Diagnose-Abfrage zu dem ersten Teilfahrzeug übertragen werden, **dadurch gekennzeichnet, dass** Daten über das Gewicht des zweiten Teilfahrzeugs, über die Achslasten des zweiten Teilfahrzeugs und über den Schlupf an den einzelnen Laufrädern oder an den Achsen des zweiten Teilfahrzeugs abgefragt werden.

2. Verfahren nach Anspruch 1, **dadurch gekennzeichnet, dass** die Daten nach einem festen Abfrage-Schema abgefragt werden.

3. Verfahren nach Anspruch 1 oder 2, **dadurch gekennzeichnet, dass** zu festgelegten Zeitpunkten eine Diagnoseabfrage durchgeführt wird, insbesondere zu einem Zeitpunkt, der kurz nach dem Anfahren des Fahrzeugverbands liegt.

## Claims

1. Method of transmitting data between vehicle sub-units in a tractor-trailer compound of vehicle sub-units, which consists of at least one first vehicle sub-unit and one second vehicle sub-unit, comprising at least one data bus with an interface (2), wherein further data, in addition to the data permissible in compliance with a specification, is transmitted via said interface (2) between said first vehicle sub-unit and said second vehicle sub-unit, with the data from said second vehicle sub-unit being transmitted to said first vehicle sub-unit by means of a diagnostic interrogation, **characterised in that** data is interrogated in relation to the weight of said second vehicle sub-unit, to the axle loads on said second vehicle sub-unit and to the wheel slip on the individual running wheels or on the axles of said second vehicle sub-unit.

2. Method according to Claim 1, **characterised in that** said data is interrogated in accordance with an invariable interrogation scheme.

3. Method according to Claim 1 or 2, **characterised in that** a diagnostic interrogation operation is performed at fixed points of time, in particular at a point of time early after the tractor-trailer compound has started off.

## Revendications

1. Procédé à transmettre des données entre des sous-unités de véhicule dans un ensemble tracteur-remorque à sous-unités de véhicule, qui est composé d'au moins une première sous-unité de véhicule et d'une deuxième sous-unité de véhicule, comprenant au moins un bus de données à une interface (2), dans lequel des données supplémentaires, au plus des données valables selon une spécification, sont transmises via ladite interface (2) entre ladite première sous-unité de véhicule et ladite deuxième sous-unité de véhicule, auxdites données provenant de ladite deuxième sous-unité de véhicule étant transmises à ladite première sous-unité de véhicule par voie d'une interrogation diagnostique, **caractérisé en ce qu'**on interroge des données relatives au poids de ladite deuxième sous-unité de véhicule, à la charge par essieu à ladite deuxième sous-unité de véhicule et au patinage aux roues de roulement individuelles ou aux essieux de ladite deuxième sous-unité de véhicule.

2. Procédé selon la revendication 1, **caractérisé en ce qu'**on interroge lesdites données en correspondance avec un devis d'interrogation invariable

3. Procédé selon la revendication 1 ou 2, **caractérisé en ce qu'**une opération d'interrogation diagnostique est réalisé aux points de temps établis, en particulier à un point de temps brièvement après la mise en marche de l'ensemble tracteur-remorque.
